# EUROPEAN PATENT APPLICATION

(11) **EP 4 270 968 A1**
(43) Date of publication of application: **01.11.2023**
(21) Application number: 21911526.8
(22) Date of filing: 22.12.2021
(51) Int. Cl.: H04N 21/434, H04N 21/236

(54) **MEDIA FILE GENERATION/RECEPTION METHOD AND DEVICE FOR SIGNALING SUBPICTURE ID INFORMATION, AND COMPUTER-READABLE RECORDING MEDIUM IN WHICH MEDIA FILE IS STORED**

(30) Priority: 23.12.2020 US 202063129603 P
(71) Applicant: LG Electronics Inc., Yeongdeungpo-gu Seoul 07336 (KR)
(72) Inventor: HENDRY, Hendry, Seoul 06772 (KR)
(74) Representative: Mooser, Sebastian Thomas
(86) International application number: PCT/KR2021/019609
(87) International publication number: WO 2022/139459

(57) **Abstract**

Disclosed herein are a media file generating/receiving method and apparatus for signaling subpicture id information and a method of transmitting a media file. The media file receiving method comprises obtaining subpicture id information for the video data from the media file and processing the video data based on the obtained subpicture id information. The obtaining the subpicture id information may be performed based on first information indicating whether a value of a subpicture id continuously increases by 1.

## Description

### Technical Field

The present disclosure relates to a method and apparatus for generating/receiving a media file, and more particularly, to a media file generating/receiving method and apparatus for signaling subpicture ID information, and a computer-readable recording medium storing a file generated by the media file generating method/apparatus of the present disclosure.

### Background Art

Recently, the demand for high-resolution and high-quality images such as 360-degree images is increasing. As the resolution or quality of an image increases, a file capacity or a frame rate increases, which inevitably increases storage cost and transmission cost. In addition, as mobile devices such as smartphones and tablet PCs become popular, the demand for multimedia services based on communication networks is rapidly increasing. However, there is a problem that hardware and network resources for multimedia services are limited.

Accordingly, there is a need for high-efficiency image compression and file processing technologies for more effectively storing and transmitting image data.

### Disclosure

### Technical Problem

An object of the present disclosure is to provide a media file generating/receiving method and apparatus with improved media file generating/receiving efficiency.

In addition, an object of the present disclosure is to provide a media file generating/receiving method and apparatus capable of improving media file generating/receiving efficiency by efficiently signaling subpicture ID information.

An object of the present disclosure is to provide a method of transmitting a media file generated by a media file generating method or apparatus according to the present disclosure.

An object of the present disclosure is to provide a recoding medium storing a media file generated by a media file generating method or apparatus according to the present disclosure.

An object of the present disclosure is to provide a recording medium storing a media file received by a media file receiving apparatus according to the present disclosure and used to reconstruct an image.

The technical problems solved by the present disclosure are not limited to the above technical problems and other technical problems which are not described herein will become apparent to those skilled in the art from the following description.

### Technical Solution

A media file receiving method performed by a media file receiving apparatus according to an aspect of the present disclosure may comprise obtaining subpicture id information for the video data from the media file and processing the video data based on the obtained subpicture id information. The obtaining the subpicture id information may be performed based on first information indicating whether a value of a subpicture id continuously increases by 1.

In the video media file receiving method of the present disclosure, the obtaining subpicture id information may obtain first subpicture id information from the media file based on the first information indicating that the value of the subpicture id continuously increases by 1.

In the video media file receiving method of the present disclosure, subpicture id information for remaining subpictures except for the first subpicture may not be obtained from the media file, and is derived based on the first subpicture id information based on the first information indicating that the value of the subpicture id continuously increases by 1.

In the video media file receiving method of the present disclosure, the obtaining subpicture id information may obtain all subpicture id information from the media file based on the first information indicating that the value of the subpicture id continuously does not increases by 1.

In the video media file receiving method of the present disclosure, the subpicture id information may be included in a sample group entry.

In the video media file receiving method of the present disclosure, the subpicture id information may include information indicating the number of subpictures.

In the video media file receiving method of the present disclosure, i-th subpicture id information may be obtained by adding 1 to (i-1)-th subpicture id information.

A media file receiving apparatus according to another aspect of the present disclosure may comprise a memory and at least one processor. The at least on processor may obtain subpicture id information for video data from a media file and process the video data based on the obtained subpicture id information. The obtaining thee subpicture id information may be performed based on first information indicating whether a value of a subpicture id continuously increases by 1.

A media file generating method performed by a media file generating apparatus according to another aspect of the present disclosure may comprise encoding the video data, generating subpicture id information for the encoded video data and generating a media file based on the encoded video data and the generated subpicture id information. The generating the subpicture id information may be performed based on first information indicating whether a value of a subpicture id continuously increases by 1.

In the video media file generating method of the present disclosure, the generating subpicture id information may generate first subpicture id information based on the first information indicating that the value of the subpicture id continuously increases by 1.

In a media file transmitting method according to another aspect of the present disclosure, a media file generated by the media file generating method or apparatus of the present disclosure may be transmitted.

A computer-readable recording medium according to another aspect of the present disclosure may store a media file generated by the media file generating method or apparatus of the present disclosure.

The features briefly summarized above with respect to the present disclosure are merely exemplary aspects of the detailed description below of the present disclosure, and do not limit the scope of the present disclosure.

### Advantageous Effects

According to the present disclosure, it is possible to provide a media file generating/receiving method and apparatus with improved media file generating/receiving efficiency.

In addition, it is possible to provide a media file generating/receiving method and apparatus capable of improving media file generating/receiving efficiency by efficiently signaling subpicture ID information.

In addition, it is possible to provide a method of transmitting a media file generated by a media file generating method or apparatus according to the present disclosure.

According to the present disclosure, it is possible to provide a recoding medium storing a media file generated by a media file generating method or apparatus according to the present disclosure.

According to the present disclosure, it is possible to provide a recording medium storing a media file received by a media file receiving apparatus according to the present disclosure and used to reconstruct an image.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically illustrating a media file transmission/receiving system according to an embodiment of the present disclosure.
FIG. 2 is a flowchart illustrating a media file transmitting method.
FIG. 3 is a flowchart illustrating a media file receiving method.
FIG. 4 is a view schematically illustrating an image encoding apparatus according to an embodiment of the present disclosure.
FIG. 5 is a view schematically illustrating an image decoding apparatus according to an embodiment of the present disclosure.
FIG. 6 is a view illustrating an example of a layer structure for a coded image/video.
FIG. 7 is a view illustrating an example of a media file structure.
FIG. 8 is a view illustrating an example of a trak box structure of FIG. 7.
FIG. 9 is a view illustrating an example of an image signal structure.
FIG. 10 is a view illustrating an example of a syntax structure signaling a subpicture id sample group.
FIG. 11 is a view illustrating an example of a syntax structure signaling a subpicture order sample group.
FIG. 12 is a view illustrating a syntax structure signaling subpicture ID information in a subpicture ID sample group according to an embodiment of the present disclosure.
FIG. 13 is a view illustrating operation of a media file receiving apparatus according to an embodiment of the present disclosure.
FIG. 14 is a view illustrating operation of a media file generating apparatus according to an embodiment of the present disclosure.
FIG. 15 is a view showing a content streaming system, to which an embodiment of the present disclosure is applicable.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of media file transmission/receiving system

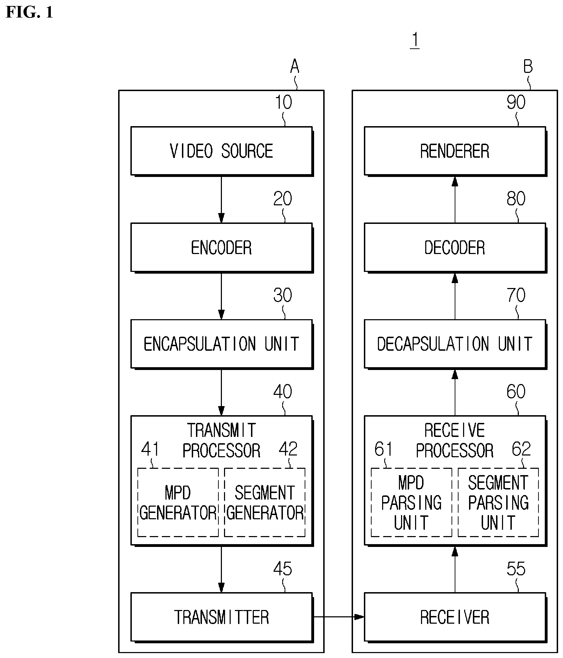

FIG. 1 is a view schematically illustrating a media file transmission/receiving system according to an embodiment of the present disclosure.

Referring to FIG. 1, the media file transmission/receiving system 1 may include a transmitting apparatus A and a receiving apparatus B. In some embodiments, the media file transmission/receiving system 1 may support adaptive streaming based on MPEG-DASH (dynamic adaptive streaming over HTTP), thereby supporting seamless media content reproduction.

The transmitting apparatus A may include a video source 10, an encoder 20, an encapsulation unit 30, a transmit processor 40 and a transmitter 45.

The video source 10 may generate or obtain media data such as video or image. To this end, the video source 10 may include a video/image capture device and/or a video/image generating device or may be connected to an external device to receive media data.

The encoder 20 may encode media data received from the video source 10. The encoder 20 may perform a series of procedures such as prediction, transform, and quantization according to a video codec standard, for example, a Versatile Video Coding (VVC) standard, for compression and encoding efficiency. The encoder 20 may output the encoded media data in the form of a bitstream.

The encapsulation unit 30 may encapsulate the encoded media data and/or media data related metadata. For example, the encapsulation unit 30 may encapsulate the data in a file format such as ISO Base Media File Format (ISO BMFF) or Common Media Application Format (CMAF), or process the data in the form of segments. Media data (hereinafter, referred to as a 'media file') encapsulated in the form of a file may be stored in a storage unit (not shown) in some embodiments. The media file stored in the storage unit may be read by the transmit processor 40 and transmitted to the receiving apparatus B according to an on demand, non-real time (NRT) or broadband method.

The transmit processor 40 may generate an image signal by processing the media file according to an arbitrary transmitting method. The media file transmitting method may include a broadcast method and a broadband method.

According to the broadcast method, the media file may be transmitted using an MPEG Media Transport (MMT) protocol or a Real time Object delivery over Unidirectional Transport (ROUTE) protocol. The MMT protocol may be a transport protocol supporting media streaming regardless of a file format or codec in an IP-based network environment. In the case of using the MMT protocol, the media file may be processed in Media Processing Units (MPUs) based on MMT and then transmitted according to the MMT protocol. The ROUTE protocol is an extension of File Delivery over Unidirectional Transport (FLUTE), and may be a transport protocol supporting real-time transmission of media files. In the case of using the ROUTE protocol, the media file may be processed into one or more segments based on MPEG-DASH and then transmitted according to the ROUTE protocol.

According to the broadband method, the media file may be transmitted through a network using HTTP (HyperText Transfer Protocol). Information transmitted through HTTP may include signaling metadata, segment information, and/or Non-Real Time (NRT) service information.

In some embodiments, the transmit processor 40 may include an MPD generator 41 and a segment generator 42 to support adaptive media streaming.

The MPD generator 41 may generate a Media Presentation Description (MPD) based on the media file. The MPD is a file including detailed information on media presentation, and may be expressed in an XML format. The MPD may provide signaling metadata, such as an identifier for each segment. In this case, the receiving apparatus B may dynamically obtain segments based on the MPD.

The segment generator 42 may generate one or more segments based on the media file. The segment may include actual media data and may have a file format such as ISO BMFF. The segment may be included in the representation of an image signal, and, as described above, may be identified based on the MPD.

In addition, the transmit processor 40 may generate an image signal according to the MPEG-DASH standard based on the generated MPD and segment.

The transmitter 45 may transmit the generated image signal to the receiving apparatus B. In some embodiments, the transmitter 45 may transmit an image signal to the receiving apparatus B through an IP network according to the MMT standard or the MPEG-DASH standard. According to the MMT standard, the image signal transmitted to the receiving apparatus B may include a presentation information document (PI) including reproduction information of the media data. According to the MPEG-DASH standard, the image signal transmitted to the receiving apparatus B may include the aforementioned MPD as reproduction information of the media data. However, in some embodiments, the MPD and the segment may be individually transmitted to the receiving apparatus B. For example, a first image signal including the MPD may be generated by the transmitting apparatus A or an external server and transmitted to the receiving apparatus B, and a second image signal including the segment may be generated by the transmitting apparatus A and may be transmitted to the receiving apparatus B.

Meanwhile, although the transmit processor 40 and the transmitter 45 are illustrated as separate elements in FIG. 1, they may be integrally implemented as a single element in some embodiments. Also, the transmit processor 40 may be implemented as an external device (e.g., DASH server) separate from the transmitting apparatus A. In this case, the transmitting apparatus A may operate as a source apparatus generating a media file by encoding the media data, and the external apparatus may operate as a server apparatus generating an image signal by processing the media data according to an arbitrary transmission protocol.

Next, the receiving apparatus B may include a receiver 55, a receive processor 60, a decapsulation unit 70, a decoder 80, and a renderer 90. In some embodiments, the receiving apparatus B may be an MPEG-DASH-based client.

The receiver 55 may receive an image signal from the transmitting apparatus A. The image signal according to the MMT standard may include a PI document and a media file. In addition, the image signal according to the MPEG-DASH standard may include an MPD and a segment. In some embodiments, the MPD and the segment may be separately transmitted through different image signals.

The receive processor 60 may extract/parse a media file by processing the received image signal according to a transport protocol.

In some embodiments, the receive processor 60 may include an MPD parsing unit 61 and a segment parsing unit 62 in order to support adaptive media streaming.

The MPD parsing unit 61 may obtain an MPD from the received image signal, and parse the obtained MPD to generate a command required for obtaining a segment. Also, the MPD parsing unit 61 may obtain media data reproduction information, for example, color conversion information, based on the parsed MPD.

The segment parsing unit 62 may obtain a segment based on the parsed MPD and parse the obtained segment to extract the media file. In some embodiments, the media file may have a file format such as ISO BMFF or CMAF.

The decapsulation unit 70 may decapsulate the extracted media file to obtain media data and metadata related thereto. The obtained metadata may have the form of a box or track in a file format. In some embodiments, the decapsulation unit 70 may receive metadata required for decapsulation from the MPD parsing unit 61 .

The decoder 80 may decode the obtained media data according to a video codec standard, for example, a VVC standard. To this end, the decoder 80 may perform a series of procedures such as inverse quantization, inverse transform, and prediction corresponding to operation of the encoder 20.

The renderer 90 may render media data such as the decoded video or image. The rendered media data may be reproduced through a display unit (not shown).

Hereinafter, a media file transmission/receiving method will be described in detail.

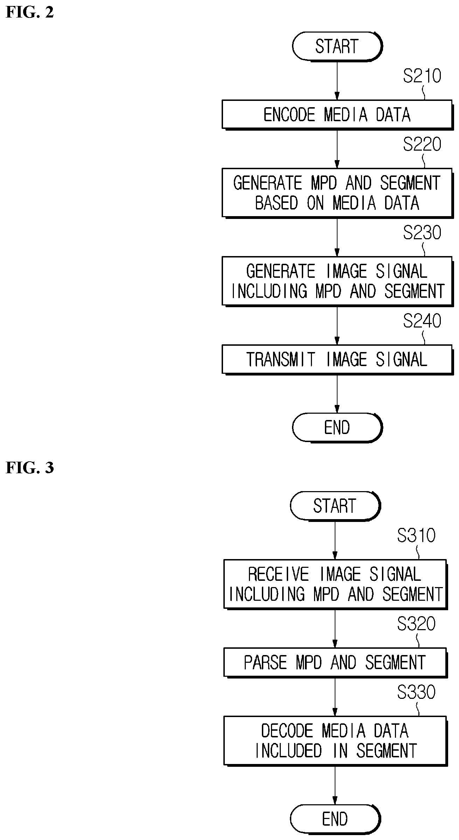

FIG. 2 is a flowchart illustrating a media file transmitting method.

In one example, each step of FIG. 2 may be performed by the transmitting apparatus A of FIG. 1. Specifically, step S210 may be performed by the encoder 20 of FIG. 1. Also, steps S220 and S230 may be performed by the transmit processor 40. Also, step S240 may be performed by the transmitter 45.

Referring to FIG. 2, the transmitting apparatus may encode media data such as a video or an image (S210). The media data may be captured/generated by the transmitting apparatus or obtained from an external device (e.g., camera, video archive, etc.). Media data may be encoded in the form of a bitstream according to a video codec standard, for example, a VVC standard.

The transmitting apparatus may generate an MPD and one or more segments based on the encoded media data (S220). The MPD may include detailed information about media presentation as described above. The segment may contain actual media data. In some embodiments, the media data may be encapsulated in a file format such as ISO BMFF or CMAF and included in a segment.

The transmitting apparatus may generate an image signal including the generated MPD and segment (S230). In some embodiments, the image signal may be individually generated for each of the MPD and segment. For example, the transmitting apparatus may generate a first image signal including an MPD and generate a second image signal including a segment.

The transmitting apparatus may transmit the generated image signal to the receiving apparatus (S240). In some embodiments, the transmitting apparatus may transmit the image signal using a broadcast method. In this case, the MMT protocol or the ROUTE protocol may be used. Alternatively, the transmitting apparatus may transmit the image signal using a broadband method.

Meanwhile, although, in FIG. 2, the MPD and an image signal including the same are described as being generated and transmitted by the transmitting apparatus (steps S220 to S240), in some embodiments, the MPD and an image including the same may be generated and transmitted by an external server different from the transmitting apparatus.

FIG. 3 is a flowchart illustrating a media file receiving method.

In an example, each step of FIG. 3 may be performed by the receiving apparatus B of FIG. 1. Specifically, step S310 may be performed by the receiver 55. Also, step S320 may be performed by the receive processor 60. Also, step S330 may be performed by the decoder 80.

Referring to FIG. 3, the receiving apparatus may receive an image signal from the transmitting apparatus (S310). An image signal according to the MPEG-DASH standard may include an MPD and a segment. In some embodiments, the MPD and the segment may be individually received through different image signals. For example, a first image signal including the MPD may be received from the transmitting apparatus of FIG. 1 or an external server, and a second image signal including the segment may be received from the transmitting apparatus of FIG. 1.

The receiving apparatus may extract the MPD and segment from the received image signal, and parse the extracted MPD and segment (S320). Specifically, the receiving apparatus may parse the MPD to generate a command required for obtaining a segment. Then, the receiving apparatus may obtain a segment based on the parsed MPD, and parse the obtained segment to obtain media data. In some embodiments, the receiving apparatus may perform decapsulation on media data in a file format in order to obtain the media data from the segment.

The receiving apparatus may decode the media data such as the obtained video or image (S330). The receiving apparatus may perform a series of procedures such as inverse quantization, inverse transform, and prediction in order to decode the media data. Then, the receiving apparatus may render the decoded media data and reproduce the media data through a display.

Hereinafter, an image encoding/decoding apparatus will be described in detail.

### Overview of image encoding apparatus

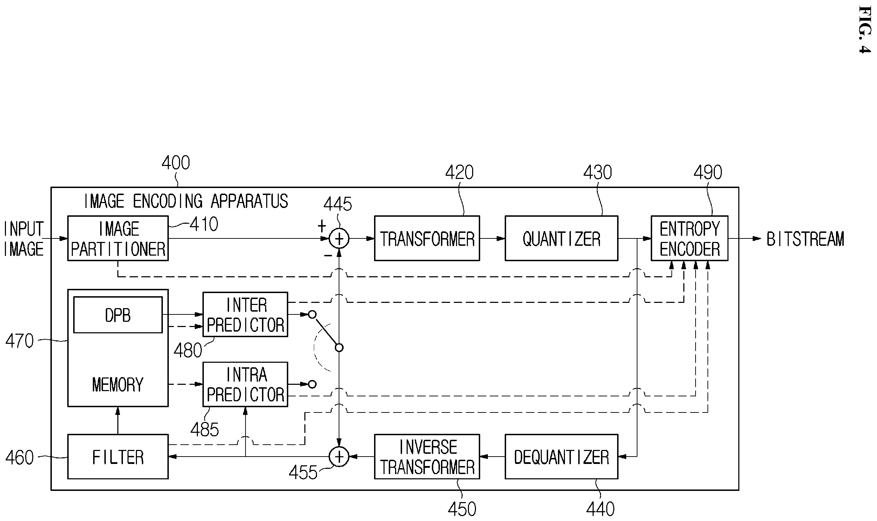

FIG. 4 is a view schematically illustrating an image encoding apparatus according to an embodiment of the present disclosure. The image encoding apparatus 400 of FIG. 4 may correspond to the encoder 20 of the transmitting apparatus A described with reference to FIG. 1.

Referring to FIG. 4, the image encoding apparatus 400 may include an image partitioner 410, a subtractor 415, a transformer 420, a quantizer 430, a dequantizer 440, an inverse transformer 450, an adder 455, a filter 460, a memory 470, an inter prediction unit 480, an intra prediction unit 485 and an entropy encoder 490. The inter prediction unit 480 and the intra prediction unit 485 may be collectively referred to as a "predictor". The transformer 420, the quantizer 430, the dequantizer 440 and the inverse transformer 450 may be included in a residual processor. The residual processor may further include the subtractor 415.

All or at least some of the plurality of components configuring the image encoding apparatus 400 may be configured by one hardware component (e.g., an encoder or a processor) in some embodiments. In addition, the memory 470 may include a decoded picture buffer (DPB) and may be configured by a digital storage medium.

The image partitioner 410 may partition an input image (or a picture or a frame) input to the image encoding apparatus 400 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QTBT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 480 or the intra prediction unit 485) may perform prediction on a block to be processed (current block) and generate a predicted block including prediction samples for the current block. The prediction unit may determine whether intra prediction or inter prediction is applied on a current block or CU unit. The prediction unit may generate various information related to prediction of the current block and transmit the generated information to the entropy encoder 490. The information on the prediction may be encoded in the entropy encoder 490 and output in the form of a bitstream.

The intra prediction unit 485 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 485 may determine the prediction mode applied to the current block by using a prediction mode applied to a neighboring block.

The inter prediction unit 480 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 480 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 480 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 415 may generate a residual signal (residual block or residual sample array) by subtracting the prediction signal (predicted block or prediction sample array) output from the prediction unit from the input image signal (original block or original sample array). The generated residual signal may be transmitted to the transformer 420.

The transformer 420 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 430 may quantize the transform coefficients and transmit them to the entropy encoder 490. The entropy encoder 490 may encode the quantized signal (information on the quantized transform coefficients) and output a bitstream. The information on the quantized transform coefficients may be referred to as residual information. The quantizer 430 may rearrange quantized transform coefficients in a block type into a one-dimensional vector form based on a coefficient scanning order and generate information on the quantized transform coefficients based on the quantized transform coefficients in the one-dimensional vector form.

The entropy encoder 490 may perform various encoding methods such as, for example, exponential Golomb, context-adaptive variable length coding (CAVLC), context-adaptive binary arithmetic coding (CABAC), and the like. The entropy encoder 490 may encode information required for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 490 and/or a storage unit (not shown) storing the signal may be included as internal/external element of the image encoding apparatus 400. Alternatively, the transmitter may be provided as the component of the entropy encoder 490.

The quantized transform coefficients output from the quantizer 430 may be used to generate a residual signal. For example, the residual signal (residual block or residual samples) may be reconstructed by applying dequantization and inverse transform to the quantized transform coefficients through the dequantizer 440 and the inverse transformer 450.

The adder 455 adds the reconstructed residual signal to the prediction signal output from the inter prediction unit 480 or the intra prediction unit 485 to generate a reconstructed signal (reconstructed picture, reconstructed block, reconstructed sample array). If there is no residual for the block to be processed, such as a case where the skip mode is applied, the predicted block may be used as the reconstructed block. The adder 455 may be called a reconstructor or a reconstructed block generator. The generated reconstructed signal may be used for intra prediction of a next block to be processed in the current picture and may be used for inter prediction of a next picture through filtering as described below.

Meanwhile, in a picture encoding and/or reconstruction process, luma mapping with chroma scaling (LMCS) is applicable.

The filter 460 may improve subjective/objective image quality by applying filtering to the reconstructed signal. For example, the filter 460 may generate a modified reconstructed picture by applying various filtering methods to the reconstructed picture and store the modified reconstructed picture in the memory 470, specifically, a DPB of the memory 470. The various filtering methods may include, for example, deblocking filtering, a sample adaptive offset, an adaptive loop filter, a bilateral filter, and the like. The filter 460 may generate various information related to filtering and transmit the generated information to the entropy encoder 490 as described later in the description of each filtering method. The information related to filtering may be encoded by the entropy encoder 490 and output in the form of a bitstream.

The modified reconstructed picture transmitted to the memory 470 may be used as the reference picture in the inter prediction unit 480. When inter prediction is applied through the image encoding apparatus 400, prediction mismatch between the image encoding apparatus 400 and the image decoding apparatus may be avoided and encoding efficiency may be improved.

The DPB of the memory 470 may store the modified reconstructed picture for use as a reference picture in the inter prediction unit 480. The memory 470 may store the motion information of the block from which the motion information in the current picture is derived (or encoded) and/or the motion information of the blocks in the picture that have already been reconstructed. The stored motion information may be transmitted to the inter prediction unit 480 and used as the motion information of the spatial neighboring block or the motion information of the temporal neighboring block. The memory 470 may store reconstructed samples of reconstructed blocks in the current picture and may transfer the reconstructed samples to the intra prediction unit 485.

### Overview of image decoding apparatus

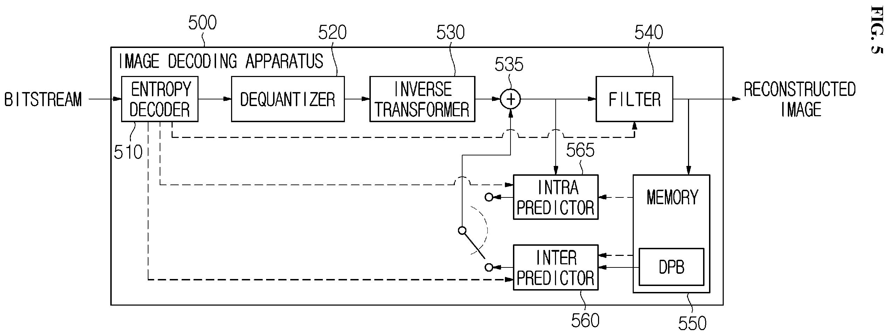

FIG. 5 is a view schematically illustrating an image decoding apparatus according to an embodiment of the present disclosure. The image decoding apparatus 500 of FIG. 5 may correspond to the decoder 80 of the receiving apparatus A described with reference to FIG. 1.

Referring to FIG. 5, the image decoding apparatus 500 may include an entropy decoder 510, a dequantizer 520, an inverse transformer 530, an adder 535, a filter 540, a memory 550, an inter prediction unit 560 and an intra prediction unit 565. The inter prediction unit 560 and the intra prediction unit 565 may be collectively referred to as a "predictor". The dequantizer 520 and the inverse transformer 530 may be included in a residual processor.

All or at least some of a plurality of components configuring the image decoding apparatus 500 may be configured by a hardware component (e.g., a decoder or a processor) according to an embodiment. In addition, the memory 550 may include a decoded picture buffer (DPB) or may be configured by a digital storage medium.

The image decoding apparatus 500, which has received a bitstream including video/image information, may reconstruct an image by performing a process corresponding to a process performed by the image encoding apparatus 100 of FIG. 4. For example, the image decoding apparatus 500 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image decoding apparatus 500 may be reproduced through a reproducing apparatus (not shown).

The image decoding apparatus 500 may receive a signal generated by the image encoding apparatus of FIG. 4 in the form of a bitstream. The received signal may be decoded through the entropy decoder 510. For example, the entropy decoder 510 may parse the bitstream to derive information (e.g., video/image information) required for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 510 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 510 may be provided to the prediction unit (the inter prediction unit 560 and the intra prediction unit 565), and the residual value on which the entropy decoding was performed in the entropy decoder 510, that is, the quantized transform coefficients and related parameter information, may be input to the dequantizer 520. In addition, information on filtering among information decoded by the entropy decoder 510 may be provided to the filter 540. Meanwhile, a receiver (not shown) for receiving a signal output from the image encoding apparatus may be further configured as an internal/external element of the image decoding apparatus 500, or the receiver may be a component of the entropy decoder 510.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 510. The sample decoder may include at least one of the dequantizer 520, the inverse transformer 530, the adder 535, the filter 540, the memory 550, the inter prediction unit 560 or the intra prediction unit 565.

The dequantizer 520 may dequantize the quantized transform coefficients and output the transform coefficients. The dequantizer 520 may rearrange the quantized transform coefficients in the form of a two-dimensional block. In this case, the rearrangement may be performed based on the coefficient scanning order performed in the image encoding apparatus. The dequantizer 520 may perform dequantization on the quantized transform coefficients by using a quantization parameter (e.g., quantization step size information) and obtain transform coefficients.

The inverse transformer 530 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 510 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 565 may predict the current block by referring to the samples in the current picture. The description of the intra prediction unit 485 is equally applied to the intra prediction unit 565.

The inter prediction unit 560 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 560 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 535 may generate a reconstructed signal (reconstructed picture, reconstructed block, reconstructed sample array) by adding the obtained residual signal to the prediction signal (predicted block, predicted sample array) output from the prediction unit (including the inter prediction unit 560 and/or the intra prediction unit 565). If there is no residual for the block to be processed, such as when the skip mode is applied, the predicted block may be used as the reconstructed block. The description of the adder 155 is equally applicable to the adder 535. The adder 535 may be called a reconstructor or a reconstructed block generator. The generated reconstructed signal may be used for intra prediction of a next block to be processed in the current picture and may be used for inter prediction of a next picture through filtering as described below.

Meanwhile, in a picture decoding process, luma mapping with chroma scaling (LMCS) is applicable.

The filter 540 may improve subjective/objective image quality by applying filtering to the reconstructed signal. For example, the filter 540 may generate a modified reconstructed picture by applying various filtering methods to the reconstructed picture and store the modified reconstructed picture in the memory 550, specifically, a DPB of the memory 550. The various filtering methods may include, for example, deblocking filtering, a sample adaptive offset, an adaptive loop filter, a bilateral filter, and the like.

The (modified) reconstructed picture stored in the DPB of the memory 550 may be used as a reference picture in the inter prediction unit 560. The memory 550 may store the motion information of the block from which the motion information in the current picture is derived (or decoded) and/or the motion information of the blocks in the picture that have already been reconstructed. The stored motion information may be transmitted to the inter prediction unit 560 so as to be utilized as the motion information of the spatial neighboring block or the motion information of the temporal neighboring block. The memory 550 may store reconstructed samples of reconstructed blocks in the current picture and transfer the reconstructed samples to the intra prediction unit 565.

In the present disclosure, the embodiments described in the filter 460, the inter prediction unit 480, and the intra prediction unit 485 of the image encoding apparatus 400 may be equally or correspondingly applied to the filter 540, the inter prediction unit 560, and the intra prediction unit 565 of the image decoding apparatus 500.

The quantizer of the encoding apparatus may derive quantized transform coefficients by applying quantization to transform coefficients, and the dequantizer of the encoding apparatus or the dequantizer of the decoding apparatus ma derive transform coefficients by applying dequantization to the quantized transform coefficients. In video coding, a quantization rate may be changed and a compression rate may be adjusted using the changed quantization rate. From an implementation point of view, in consideration of complexity, a quantization parameter (QP) may be used instead of directly using the quantization rate. For example, a quantization parameter having an integer value of 0 to 63 may be used and each quantization parameter value may correspond to an actual quantization rate. In addition, a quantization parameter QP_{Y} for a luma component (luma sample) and a quantization parameter QP_{C} for a chroma component (chroma sample) may be differently set.

In a quantization process, a transform coefficient C may be received as input and divided by quantization rate Qₛₜₑₚ, and a quantized transform coefficient C' may be derived based on this. In this case, in consideration of computational complexity, the quantization rate is multiplied by a scale to form an integer and shift operation may be performed by a value corresponding to the scale value. Based on the product of the quantization rate and the scale value, a quantization scale may be derived. That is, the quantization scale may be derived according to QP. In this case, by applying the quantization scale to the transform coefficient C, the quantized transform coefficient C' may be derived based on this.

A dequantization process is an inverse process of the quantization process, and the quantized transform coefficient C' may be multiplied by the quantization rate Qₛₜₑₚ, thereby deriving a reconstructed transform coefficient C" based on this. In this case, a level scale may be derived according to the quantization parameter, the level scale may be applied to the quantized transform coefficient C', thereby deriving the reconstructed transform coefficient C" based on this. The reconstructed transform coefficient C" may be slightly different from the original transform coefficient C due to loss in the transform and/or quantization process. Accordingly, even the encoding apparatus may perform dequantization in the same manner as the decoding apparatus.

Meanwhile, adaptive frequency weighting quantization technology of adjusting a quantization strength according to frequency may be applied. The adaptive frequency weighting quantization technology may correspond to a method of differently applying a quantization strength according to the frequency. In adaptive frequency weighting quantization, the quantization strength may differently be applied according to the frequency using a predefined quantization scaling matrix. That is, the above-described quantization/dequantization process may be performed further based on the quantization scaling matrix.

For example, a different quantization scaling matrix may be used according to a size of a current block and/or whether a prediction mode applied to the current block in order to generate a residual signal of the current block is inter prediction or intra prediction. The quantization scaling matrix may also be referred to as a quantization matrix or a scaling matrix. The quantization scaling matrix may be predefined. In addition, frequency quantization scale information for the quantization scaling matrix for frequency adaptive scaling may be constructed/encoded by the encoding apparatus and signaled to the decoding apparatus. The frequency quantization scale information may be referred to as quantization scaling information. The frequency quantization scale information may include scaling list data scaling_list_data.

Based on the scaling list data, the quantization scaling matrix may be derived. In addition, the frequency quantization scale information may include present flag information specifying whether the scaling list data is present. Alternatively, when the scaling list data is signaled at a higher level (e.g., SPS), information specifying whether the scaling list data is modified at a lower level (e.g., PPS or tile group header, etc.) may be further included.

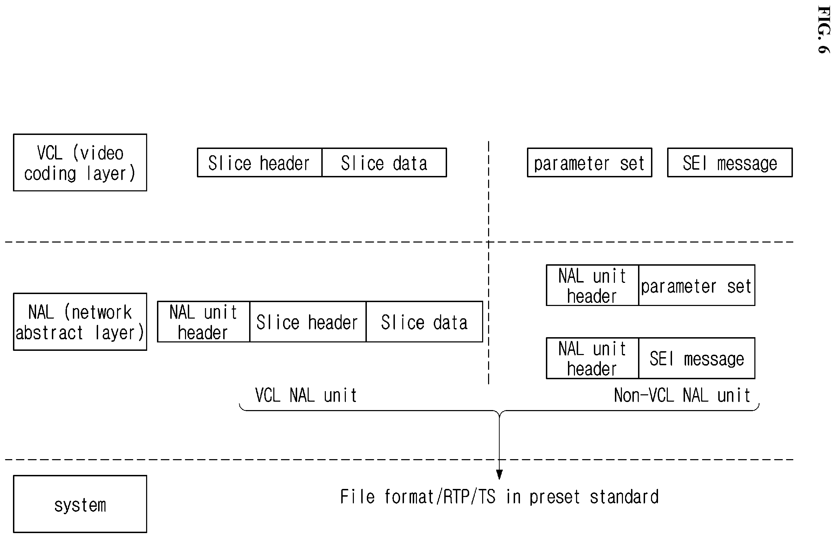

FIG. 6 is a view illustrating an example of a layer structure for a coded image/video.

The coded image/video is classified into a video coding layer (VCL) for an image/video decoding process and handling itself, a lower system for transmitting and storing encoded information, and a network abstraction layer (NAL) present between the VCL and the lower system and responsible for a network adaptation function.

In the VCL, VCL data including compressed image data (slice data) may be generated or a supplemental enhancement information (SEI) message additionally required for a decoding process of an image or a parameter set including information such as a picture parameter set (PPS), a sequence parameter set (SPS) or a video parameter set (VPS) may be generated.

In the NAL, header information (NAL unit header) may be added to a raw byte sequence payload (RBSP) generated in the VCL to generate a NAL unit. In this case, the RBSP refers to slice data, a parameter set, an SEI message generated in the VCL. The NAL unit header may include NAL unit type information specified according to RBSP data included in a corresponding NAL unit.

As shown in FIG. 6, the NAL unit may be classified into a VCL NAL unit and a non-VCL NAL unit according to the type of the RBSP generated in the VCL. The VCL NAL unit may mean a NAL unit including information on an image (slice data), and the Non-VCL NAL unit may mean a NAL unit including information (parameter set or SEI message) required to decode an image.

The VCL NAL unit and the Non-VCL NAL unit may be attached with header information and transmitted through a network according to the data standard of the lower system. For example, the NAL unit may be modified into a data format of a predetermined standard, such as H.266/VVC file format, RTP (Real-time Transport Protocol) or TS (Transport Stream), and transmitted through various networks.

As described above, in the NAL unit, a NAL unit type may be specified according to the RBSP data structure included in the corresponding NAL unit, and information on the NAL unit type may be stored in a NAL unit header and signaled. For example, this may be largely classified into a VCL NAL unit type and a non-VCL NAL unit type depending on whether the NAL unit includes image information (slice data). The VCL NAL unit type may be subdivided according to the property/type of the picture included in the VCL NAL unit, and the Non-VCL NAL unit type may be subdivided according to the type of a parameter set.

An example of VCL NAL unit types according to the picture type is as follows.
- "IDR_W_RADL", "IDR_N_LP": VCL NAL unit type for an instantaneous decoding refresh (IDR) picture which is a type of an IRAP (Intra Random Access Point) picture;
   The IDR picture may be a first picture in decoding order in a bitstream or a picture after the first picture. A picture having a NAL unit type such as "IDR W RADL" may have one or more Random Access Decodable Leading (RADL) pictures associated with the picture. In contrast, a picture having a NAL unit type such as "IDR N LP" does not have any leading picture associated with the picture.
- "CRA_NUT": VCL NAL unit type for a Clean Random Access (CRA) picture which is a type of IRAP picture;
   The CRA picture may be a first picture in decoding order in a bitstream or may be a picture after the first picture. The CRA picture may be associated with a RADL or RASL (Random Access Skipped Leading) picture.
- "GDR NUT": VCL NAL unit type for a random accessible Gradual Decoding Refresh (GDR) picture;
- "STSA_NUT": VCL NAL unit type for a random accessible Step-wise Temporal Sublayer Access (STSA) picture;
- "RADL NUT": VCL NAL unit type for a RADL picture which is a leading picture;
- "RASL NUT": VCL NAL unit type for a RASL picture which is a leading picture;
- "TRAIL NUT": VCL NAL unit type for a trailing picture;
   A trailing picture is a non-IRAP picture, which may follow the IRAP picture or GDR picture associated with the trailing picture in output order, and may follow the IRAP picture associated with the trailing picture in decoding order.

Next, an example of non-VCL NAL unit types according to the parameter set type is as follows.
- "DCI NUT": non-VCL NAL unit type including decoding capability information (DCI)
- "VPS_NUT": non-VCL NAL unit type including a video parameter set (VPS)
- "SPS_NUT": non-VCL NAL unit type including a sequence parameter set (SPS)
- "PPS_UT": non-VCL NAL unit type including a picture parameter set (PPS)
- "PREFIX_APS_NUT", "SUFFIX_APS_NUT": non-VCL NAL unit type including an adaptation parameter set (APS)
- "PH NUT": non-VCL NAL unit type including a picture header

The above-described NAL unit types may be identified by predetermined syntax information (e.g., nal_unit_type) included in the NAL unit header.

Meanwhile, in the present disclosure, the image/video information encoded in the form of a bitstream may not only include picture partitioning information, intra/inter prediction information, residual information and/or in-loop filtering information, etc. but also include slice header information, picture header information, APS information, PPS information, SPS information, VPS information, and/or DCI. In addition, the encoded image/video information may further include general constraint information (GCI) and/or NAL unit header information. According to embodiments of the present disclosure, the encoded image/video information may be encapsulated into a media file of a predetermined format (e.g., ISO BMFF) and transmitted to a receiving apparatus.

### Media file

The encoded image information may be configured (or formatted) based on a predetermined media file format to generate a media file. For example, the encoded image information may form a media file (segment) based on one or more NAL units/sample entries for the encoded image information.

A media file may include sample entry(s) and track(s). In one example, a media file may include various records, and each record may include information related to a media file format or information related to an image. In one example, one or more NAL units may be stored in a configuration record (or decoder configuration record) field in the media file. Additionally, the media file may contain an operating point record and/or an operating point group box. In this disclosure, a decoder configuration record supporting Versatile Video Coding (VVC) may be referred to as a VVC decoder configuration record. Likewise, an operating point record supporting VVC may be referred to as a VVC operating point record.

The term "sample" used in the media file format may mean all data associated with a single time or single element of any one of three sample arrays (Y, Cb, Cr) representing a picture. When the term "sample" is used in the context of a track (in a media file format), "sample" may refer to all data associated with a single time of the track. Here, the time may correspond to a decoding time or a composition time. Also, when the term "sample" is used in the context of a picture (e.g., luma sample), "sample" may indicate a single element of any one of three sample arrays representing the picture.

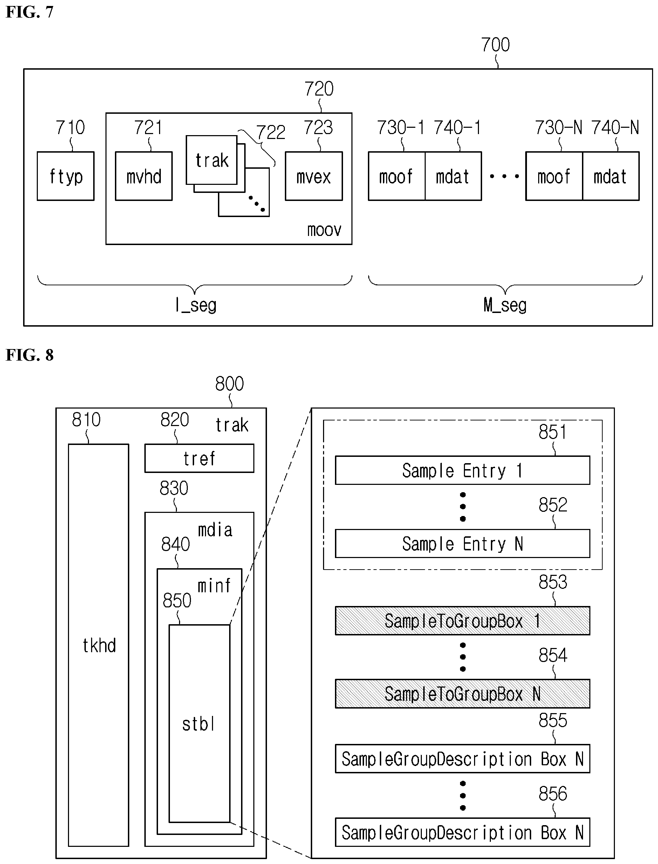

FIG. 7 is a view illustrating an example of a media file structure.

As described above, in order to store and transmit media data such as audio, video, or image, a standardized media file format may be defined. In some embodiments, the media file may have a file format according to the ISO base media file format (ISO BMFF).

A media file may include one or more boxes. Here, the box may be a data block or object including media data or metadata related to the media data. Within a media file, boxes may form a hierarchical structure. Accordingly, the media file may have a form suitable for storage and/or transmission of large-capacity media data. Also, the media file may have a structure that facilitates access to specific media data.

Referring to FIG. 7, the media file 700 may include an ftyp box 710, a moov box 720, a moof box 730, and an mdat box 740.

The ftyp box 710 may include a file type, file version, and/or compatibility related information of the media file 700. In some embodiments, the ftyp box 710 may be located at the beginning of the media file 700.

The moov box 720 may include metadata describing the media data in the media file 700. In some embodiments, the moov box 720 may be present in an uppermost layer among metadata-related boxes. Also, the moov box 720 may include header information of the media file 700. For example, the moov box 720 may include a decoder configuration record as decoder configuration information.

The moov box 720 is a sub-box, and may include an mvhd box 721, a trak box 722 and an mvex box 723.

The mvhd box 721 may include presentation-related information (e.g., media creation time, change time, period, etc.) of media data in the media file 700.

The trak box 722 may include metadata for a track of media data. For example, the trak box 722 may contain stream-related information, presentation-related information, and/or access-related information for an audio track or a video track. A plurality of trak boxes 722 may be present according to the number of tracks present in the media file 700. An example of the structure of the trak box 722 will be described later with reference to FIG. 8.

The mvex box 723 may include information on whether one or more movie fragments is present in the media file 700. The movie fragment may be a part of media data obtained by dividing media data in the media file 700. The movie fragment may include one or more coded pictures. For example, the movie fragment may include one or more picture groups (GOPs), and each picture group may include a plurality of coded frames or pictures. The movie fragment may be stored in each of the mdat boxes 740-1 to 740-N (where N is an integer greater than or equal to 1).

The moof boxes 730-1 to 730-N (where N is an integer greater than or equal to 1) may include metadata for movie fragments, that is, mdat boxes 740-1 to 740-N. In some embodiments, the moof boxes 730-1 to 730-N may be present in an uppermost layer among metadata-related boxes of the movie fragment.

The mdat boxes 740-1 to 740-N may include actual media data. A plurality of mdat boxes 740-1 to 740-N may be present according to the number of movie fragments present in the media file 700. Each of the mdat box 740-1 to 740-N may include one or more audio samples or video samples. In one example, a sample may mean an access unit (AU). When the decoder configuration record is stored in the sample entry, the decoder configuration record may include a size of a length field for indicating the length of a Network Abstraction Layer (NAL) unit to which each sample belongs as well as a parameter set.

In some embodiments, the media file 700 may be processed and stored and/or transmitted in units of segments. The segment may include an initialization segment I_seg and a media segment M_seg.

The initialization segment I_seg may be an obj ect type data unit including initialization information for accessing a representation. The initialization segment I_seg may include the aforementioned ftyp box 710 and/or moov box 720.

The media segment M_seg may be an object type data unit including temporally divided media data for a streaming service. The media segment M_seg may include the aforementioned moof boxes 730- 1 to 230-N and mdat boxes 740-1 to 740-N. Although not shown in FIG. 7, the media segment M_seg may further include a styp box including segment type related information and a sidx box including identification information of subsegments included in the media file 700 (optional).

FIG. 8 is a view illustrating an example of a trak box structure of FIG. 7.

Referring to FIG. 8, the trak box 800 may include a tkhd box 810, a tref box 820 and a mdia box 830.

The tkhd box 810 is a track header box, and may include header information of a track (hereinafter, referred to as a 'corresponding track') indicated by the trak box 800, for example, a creation/modification time of the corresponding track, a track identifier and the like.

The tref box 820 is a track reference box, and may include reference information of the corresponding track, for example, a track identifier of another track referenced by the corresponding track.

The mdia box 830 may include information and objects describing media data in the corresponding track. In some embodiments, the mdia box 830 may include a minf box 840 that provides information on the media data. Also, the minf box 840 may include an stbl box 850 including metadata for samples including the media data.

The stbl box 850 is a sample table box, and may include position information, time information, and the like of samples in a track. A reader may determine a sample type, a sample size within a container and an offset based on the information provided by the stbl box 850, and locate samples in the correct time order.

The stbl box 850 may include one or more sample entry boxes 851 and 852. Sample entry boxes 851 and 852 may provide various parameters for a particular sample. For example, a sample entry box for a video sample may include the width, height, resolution and/or frame count of the video sample. In addition, a sample entry box for an audio sample may include a channel count, a channel layout and/or a sampling rate of the audio sample. In some embodiments, the sample entry boxes 851 and 852 may be included in a sample description box (not shown) in the stbl box 850. The sample description box may provide detailed information on a coding type applied to a sample and any initialization information required for the coding type.

In addition, the stbl box 850 may include one or more sample-to-group boxes 853 and 854 and one or more sample group description boxes 855 and 856.

The sample-to-group boxes 853 and 854 may indicate a sample group to which a sample belongs. For example, the sample-to-group boxes 853 and 854 may include a grouping type syntax element (e.g., grouping_type) indicating the type of the sample group. Also, the sample-to-group boxes 853 and 854 may contain one or more sample group entries. The sample group entry may include a sample count syntax element (e.g., sample_count) and a group description index syntax element (e.g., group_description_index). Here, the sample count syntax element may indicate the number of contiguous samples to which the corresponding group description index is applied. The sample group may include a stream access point (SAP) sample group, a random access recovery point sample group, and the like, and details thereof will be described later.

The sample group description boxes 855 and 856 may provide a description of a sample group. For example, the sample group description boxes 855 and 856 may include a grouping type syntax element (e.g., grouping_type). The sample group description boxes 855 and 856 may correspond to the sample-to-group boxes 853 and 854 having the same grouping type syntax element value. Also, the sample group description boxes 855 and 856 may include one or more sample group description entries. The sample group description entries may include a 'spor' sample group description entry, a 'minp' sample group description entry, a 'roll' sample group description entry, and the like.

As described above with reference to FIGS. 7 and 8, media data may be encapsulated into a media file according to a file format such as ISO BMFF. In addition, the media file may be transmitted to the receiving apparatus through an image signal according to the MMT standard or the MPEG-DASH standard.

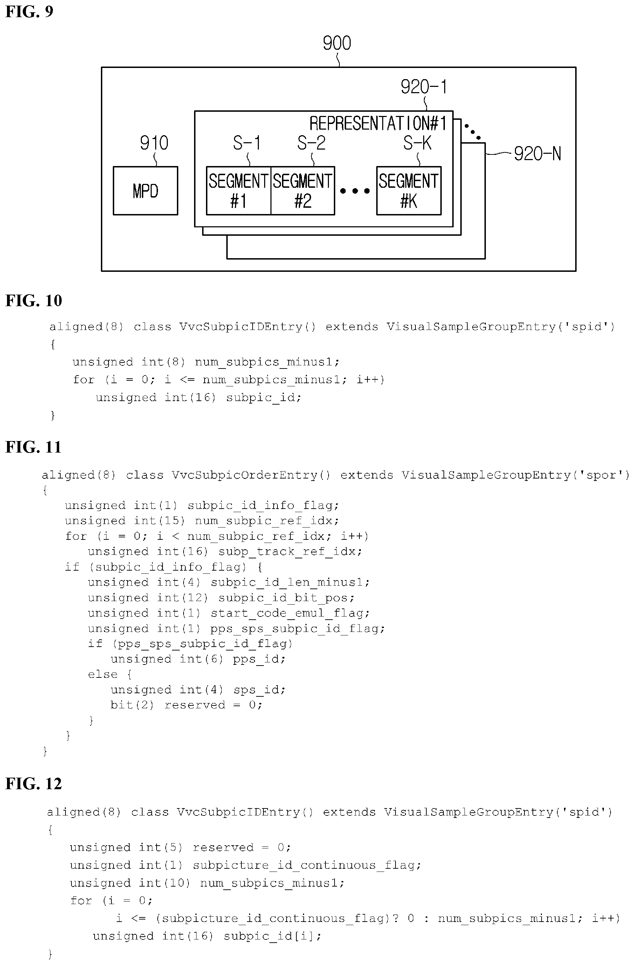

FIG. 9 is a view illustrating an example of an image signal structure.

Referring to FIG. 9, an image signal conforms to the MPEG-DASH standard and may include an MPD 910 and a plurality of representations 920-1 to 920-N.

The MPD 910 is a file including detailed information on media presentation, and may be expressed in an XML format. The MPD 910 may include information on a plurality of representations 920-1 to 920-N (e.g., bit rate of streaming content, image resolution, frame rate, etc.) and information on URLs of HTTP resources (e.g., initialization segment and media segments).

Each of the representations 920-1 to 920-N (where N is an integer greater than 1) may be divided into a plurality of segments S-1 to S-K (where K is an integer greater than 1). Here, the plurality of segments S-1 to S-K may correspond to the initialization segment and media segments described above with reference to FIG. 7. The K-th segment S-K may represent the last movie fragment in each of the representations 920-1 to 920-N. In some embodiments, the number (that is, the value of K) of segments S-1 to S-K included in each of the representations 920-1 to 920-N may be different from each other.

Each of the segments S-1 to S-K may include actual media data, such as one or more video or image samples. The characteristics of the video or image samples contained within each of the segments S-1 to S-K may be described by the MPD 910.

Each of the segments S-1 to S-K has a unique URL (Uniform Resource Locator) and thus may be accessed and reconstructed independently.

Meanwhile, three types of elementary streams may be defined to store VVC content. First, a video elementary stream that does not contain any parameter sets may be defined. In this case, all parameter sets may be stored in one sample entry or a plurality of sample entries. Second, a video and parameter set elementary stream that may contain parameter sets and may have parameter sets stored in one sample entry or a plurality of sample entries may be defined. Thirdly, a non-VCL elementary stream containing non-VCL NAL units synchronized with an elementary stream carried within a video track may be defined. In this case, the non-VCL track may not include parameter sets in sample entries.

### Definition of VVC video stream

Sample entry types may include 'vvc1', 'vvi1' and 'vvs1'. Box types may include 'vvcC' and 'wnC'. A container may correspond to a sample table box ('stb1'). A 'vvc1' or 'vvi1' sample entry may be mandatory in at least one track among the tracks carrying a VVC bitstream. In the quantity of sample entries, one or more sample entries may be present. A VVC sample entry may be defined to be a sample entry that has sample entry type equal to 'vvc1' or 'vvi1'. Each sample entry of a VVC track shall be a VVC sample entry. A VVC sample entry shall contain a VVC Configuration Box, as defined below. The VVC sample entry may include a VVC configuration record. An optional BitRateBox may be present in a VVC sample entry to signal the bit rate information of the VVC video stream. Extension descriptors that should be inserted into the Elementary Stream Descriptor, when used in MPEG-4, may also be present. Multiple sample entries may be used, as permitted by the ISO Base Media File Format specification, to indicate sections of video that use different configurations or parameter sets. If a VVC subpicture track contains a conforming VVC bitstream, which can be consumed without other VVC subpicture tracks, a regular VVC sample entry may be used ('vvc1' or 'vvi1') for the VVC subpicture track.

Otherwise, the 'vvs1' sample entry may be used for the VVC subpicture track, and the following constraints apply for the VVC subpicture track:
The track_in_movie flag shall be equal to a first value (e.g., 0).
The VVC subpicture track shall contain one and only one sample entry.
The VVC subpicture track shall be referenced by at least one VVC base track through the 'subp' track reference.

DCI, OPI, VPS, SPS, PPS, AUD, PH, EOS, EOB and other AU- or picture-level non-VCL NAL units shall be absent both in the sample entry and in the samples of 'vvs1' tracks.

Unless indicated otherwise, child boxes of video sample entries (such as CleanApertureBox and PixelAspectRatioBox) should not be present in the sample entry and, if present, shall be ignored.

A sample shall not be marked as a sync sample unless all the VCL NAL units that the sample contains conform to the sync sample requirements.

The composition time offset information for samples of a 'vvs1' track shall not be present.

Subsample information for samples of a 'vvs1' track may be present; if present, the subsample information shall follow the definition of sub-samples for VVC.

A VVC track may contain a 'subp' track reference, with entries containing either a track_ID value of a VVC subpicture track or a track_group_id value of an 'alte' track group of VVC subpicture tracks. A sample group of type 'spor' shall be present in each VVC base track. A dedicated sample entry type for a VVC base track would enable indicating a VVC base track through the codecs MIME parameter of the track type. On the other hand, it might be undesirable to specify a great number of VVC sample entry types. The sample entry of type 'vvs1' shall contain VvcNALUConfigBox. When the VVC subpicture track is referenced by a VVC base track containing a 'spor' sample group description entry having subpic_id_info_flag equal to a second value (e.g., 1), the VVC subpicture track shall contain a subpicture ID sample group description, potentially using the default sample grouping mechanism. When the sample entry name is 'vvc1' or 'vvi1', the stream to which this sample entry applies shall be a compliant VVC stream as viewed by a VVC decoder operating under the configuration (including profile, tier, and level) given in the VVCConfigurationBox. When the sample entry name is 'vvc1', the value of array_completeness shall be equal to a second value (e.g., 1) for arrays of DCI, VPS, SPS, and PPS NAL units, and a first value (e.g., 0) for all other arrays. When the track does not natively contain a VVC bitstream and does not represent a VVC bitstream after resolving 'subp' and 'vvcN' track references, the track shall contain an 'oref' track reference either to a track that carries the 'vopi' sample group or to an Operating Points Entity Group. All the other VVC tracks of the VVC bitstream shall have a track reference of type 'oref' to the track that carries the 'vopi' sample group. For example, when a single-layer VVC bitstream contains two temporal sublayers stored in different tracks, the track that contains the sublayer with TemporalId equal to a second value (e.g., 1) may contain an 'oref' track reference to the track that contains the sublayer with TemporalId equal to a first value (e.g., 0).

### Carriage of subpictures in track

The VVC file format defines various types of tracks as follows.

VVC track: A VVC track may indicate the VVC bitstream, by including NAL units in samples and sample entries, possibly by referencing VVC tracks containing other sublayers of the VVC bitstream, and possibly by referencing VVC subpicture tracks. When a VVC track references VVC subpicture tracks, the VVC track may be referred to as a VVC base track.

VVC non-VCL track: Adaptive Parameter Sets (APSs) carrying Adaptive Loop Filter (ALF), Luma Mapping with Chroma Scaling (LMCS) or scaling list parameters and other non-VCL NAL units may be stored in a track that is separate from the track containing the VCL NAL units and transmitted through the track. The VVC non-VCL track may refer to the track.

VVC subpicture track: A VVC subpicture track may contain a sequence of one or more VVC subpictures or a sequence of one or more complete slices forming a rectangular area. In addition, a sample of a VVC subpicture track may contain one or more complete subpictures that are contiguous in decoding order or one or more complete slices that are contiguous in decoding order and form a rectangular area. VVC subpictures or slices included in each sample of a VVC subpicture track may be contiguous in decoding order.

On the other hand, VVC non-VCL tracks and VVC subpicture tracks may enable optimal delivery of VVC video in streaming applications. Each of the tracks may be carried in its own DASH representations. In addition, for decoding and rendering of a subset of tracks, a DASH representation containing a subset of VVC subpicture tracks and a DASH representation containing non-VCL tracks may be requested by the client, for each segment. In this way, it is possible to avoid redundant transmission of APS and other non-VCL NAL units.

### PU reconstruction from sample in VVC track referencing VVC subpicture tracks

A sample of a VVC track may be resolved into picture units (PUs) containing the following NAL units.
- AUD NAL units (if present in the sample); The AUD (Access Unit Delimiter) NAL unit may be a first NAL unit in the sample.
- SEI NAL units contained within a parameter set and the sample entry, if the sample is a first sample in a sequence of samples associated with the same sample entry.

If at least one NAL unit having a nal_unit_type such as EOS_NUT, EOB_NUT, SUFFIX_APS_NUT, SUFFIX_SEI NUT, RSV NVCL 27, UNSPEC_30 or UNSPEC_31 is present in the sample (the NAL unit having such a NAL unit type may not precede the first VCL NAL unit in the PU), NAL units except for the first NAL unit among such NAL units in the sample; Otherwise, all NAL units in the sample.
- Content of time-aligned samples resolved (in decoding time order) from each referenced VVC subpicture track; the VVC subpicture tracks are in the order of VVC subpicture tracks referenced in the 'subp' track reference (when num_subpic_ref_idx is a first value (e.g., 0) in the same group entry as the 'spor' sample group entry mapped to the sample) , or the order specified in the 'spor' sample group description entry mapped to the sample (if num_subpic_ref_idx is greater than a first value (e.g., 0) in the same group entry as the 'spor' sample group entry mapped to the sample); All DCI, OPI, VPS, SPS, PPS, AUD, PH, EOS, EOB and access unit (AU)-level or picture-level non-VCL NAL units are excluded; The track reference may be resolved as described below.

On the other hand, when the referenced VVC subpicture track is associated with a VVC non-VCL track, the resolved samples of the VVC subpicture track may contain non-VCL NAL unit(s) of the time-aligned samples in the VVC non-VCL track.

All NAL units in the sample with nal_unit_type equal to EOS_NUT, EOB_NUT, SUFFIX_APS_NUT, SUFFIX_SEI NUT, FD_NUT, RSV_NVCL_27, UNSPEC_30, or UNSPEC_31.

If num_subpic_ref_idx in the 'spor' sample group description entry mapped to the sample is equal to a first value (e.g., 0), each track reference in the 'subp' box may be resolved as follows. Otherwise, each instance of the track reference subp_track_ref_idx in the 'spor' sample group description entry mapped to the sample may be resolved as follows.

Each sample of the VVC base track resolved from the 'subp' track references may form a rectangular region without holes (i.e., all samples in the rectangular region are covered) and without overlaps (i.e., all samples in the rectangular region are covered only once).

Meanwhile, if the track reference points to a track ID of a VVC subpicture track, the track reference may be resolved to the VVC subpicture track.

Otherwise (the track reference points to an 'alte' track group), the track reference may be resolved to any of the tracks of the 'alte' track group, and if a particular track reference index value was resolved to a particular track in the previous sample, it shall be resolved in the current sample to either of the following:
- the same particular track, or
- any other track in the same 'alte' track group that contains a sync sample that is time-aligned with the current sample.
   The VVC subpicture tracks in the same 'alte' track group are necessarily independent of any other VVC subpicture tracks referenced by the same VVC base track to avoid decoding mismatches and could therefore be constrained as follows:
   - All the VVC subpicture tracks contain VVC subpictures.
   - The subpicture boundaries are like picture boundaries.
      If a reader selects VVC subpicture tracks containing VVC subpictures with a set of subpicture ID values that is the initial selection or differs from the previous selection, the following steps may be taken:
   - The 'spor' sample group description entry is studied to conclude whether a PPS or SPS NAL unit needs to be changed. An SPS change is only possible at the start of a CLVS.
   - If the 'spor' sample group description entry indicates that start code emulation prevention bytes are present before or within the subpicture IDs in the containing NAL unit, an RBSP is derived from the NAL unit (i.e., start code emulation prevention bytes are removed). After the overriding in the next step, start code emulation prevention is re-done.
   - The reader uses the bit position and subpicture ID length information in the 'spor' sample group entry to conclude which bits are overwritten to update the subpicture IDs to the selected ones.
   - When the subpicture ID values of a PPS or SPS are initially selected, the reader needs to rewrite the PPS or SPS, respectively, with the selected subpicture ID values in the reconstructed access unit (AU).
   - When the subpicture ID values of a PPS or SPS are changed compared to the previous PPS or SPS (respectively) with the same PPS ID value or SPS ID value (respectively), the reader needs to include a copy of that previous PPS and SPS (if the PPS or SPS with that same PPS or SPS ID value, respectively, is not present in the access unit (AU) otherwise) and rewrite the PPS or SPS (respectively) with the updated subpicture ID values in the reconstructed access unit (AU).
      When there is a 'minp' sample group description entry mapped to the sample of the VVC base track, the following operations may be applied:
   - The value of pps_mixed_nalu_types_in_pic_flag is derived based on the 'minp' sample group description entry.
      If the derived value differs from that in the previous PPS NAL unit with the same PPS ID in the reconstructed bitstream, the following may apply:
   - When no PPS was included in the picture by the steps above, the reader needs to include a copy of the PPS with the updated pps_mixed_nalu_types_in_pic_flag value in the reconstructed picture unit (PU).
   - The reader uses the bit position in the 'minp' sample group entry to conclude which bit is overwritten to update the pps_mixed_nalu_types_in_pic_flag.

### Stream access point sample group

The stream access point (SAP) sample group may be used to provide information on all SAPs. Hereinafter, in the present disclosure, the stream access point sample group may be referred to as an 'sap' sample group. The 'sap' sample group may be defined in a standard document such as ISO/IEC 14496-12. A specific example of syntax grouping type parameter indicating the grouping type of the 'sap' sample group is as shown in Table 1 below.

| |
|---|
| ```
The syntax of grouping_type_parameter is specified as follows.

 {
 unsigned int(28) target_layers;
 unsigned int(4) layer_id_method_idc;
 }
``` |

Referring to Table 1, syntax grouping_type_parameter may include syntax elements target_layers and layer_id_method_idc.

The syntax element target_layers may indicate target layers for predetermined SAPs. The semantics of target_layers may be determined based on the value of the syntax element layer_id_method_idc. For example, when layer_id_method_idc is equal to a first value (e.g., 0), target_layers may be reserved.

The syntax element layer_id_method_idc may indicate the semantics of target_layers. layer_id_method_idc equal to 0 may indicate that target layers are composed of all layers represented by a track. In contrast, the semantics of layer_id_method_idc not equal to 0 may be specified by derived media file specifications.

When layer_id_method_idc is equal to a first value (e.g., 0), a SAP may be interpreted as follows:
- If the sample entry type is 'vvc1' or 'vvi1', and the track does not contain any sublayer with TemporalId equal to a first value (e.g., 0), a SAP specifies access to all the sublayers present in the track.
- Otherwise, a SAP may specify access to all layers present in the track.

For reference, if the sample entry type is 'vvc1' or 'vvi1', and the track does not contain any sub-layer with TemporalId equal to a first value (e.g., 0), an STSA picture with TemporalId equal to the lowest TemporalId present in the track may serve as a SAP.

The semantics of layer_id_method_idc equal to a second value (e.g., 1) may be specified in a standard document such as ISO/IEC 14496-15,

A gradual decoding refresh (GDR) picture in the VVC bitstream may be generally indicated with SAP type 4 in the 'sap ' sample group. VVC may enable subpictures with different VCL NAL unit types within the same coded picture. A GDR may be obtained by updating subpictures of each subpicture index as an IRAP subpicture within a range of pictures. However, VVC does not specify a decoding process that would start from a picture having mixed VCL NAL unit types.

A sample attribute in a media file may be defined as follows.
- Condition 1: A sample in a VVC track references a picture parameter set (PPS) with pps_mixed_nalu_types_in_pic_flag equal to a second value (e.g., 1) (that is, each picture referencing the PPS has a hybrid NAL unit type).
- Condition 2: For each subpicture index i in the range of 0 to sps_num_subpics_minus1, inclusive, all of the following child conditions are satisfied.
   2-1) sps_subpic_treated_as_pic_flag[ i ] is equal to a second value (e.g., 1) (that is, an i-th subpicture is treated as one picture).
   2-2) There is at least one intra random access point (IRAP) subpicture having the same subpicture index i in the current sample or the subsequent sample of the current sample in the same coded layer video sequence (CLVS).

When the conditions are all satisfied, the following sample attributes may apply to the sample.

Sample attribute 1: The sample may be indicated to be a SAP sample of type 4; here, SAP sample of type 4 may contain GDR picture(s) with ph_recovery_poc_cnt greater than a first value (e.g., 0).

Sample attribute 2: The sample may be mapped to a 'roll' sample group description entry with a roll _distance value that is correct for a decoding process that omits decoding of subpictures with a particular subpicture index before there is an IRAP subpicture.

When the `SAP' sample groups are used, the 'sap' sample groups shall be used on all tracks carrying the same VVC bitstream.

### Random access recovery point sample group

The random access recovery point sample group may be used to provide information on recovery points for gradual decoding refresh (GDR). Hereinafter, in the present disclosure, the random access recovery point sample group may be referred to as a 'roll' sample group.

When a 'roll' sample group is used with VVC tracks, the syntax and semantics of grouping_type_parameter may be defined in a standard document such as ISO/IEC 14496-12. A specific example thereof was described above with respect to Table 1.

layer_id_method_idc equal to a first value (e.g., 0) and a second value (e.g., 1) may be used when the pictures of the target layers of a sample that is mapped to the 'roll' sample group are GDR pictures.

When layer_id_method_idc is equal to a first value (e.g., 0), the 'roll' sample group may specify the behaviour for all layers present in the track. Meanwhile, the semantics of layer_id_method_idc equal to 1 may be defined in a standard document such as ISO/IEC 14496-15. For example, when layer_id _method_idc is equal to a second value (e.g., 1), each bit in the target_layers field may indicate a layer carried in a track. Since the length of the field is only 28 bits, indications of SAPs within a track may be constrained to a maximum of 28 layers. Each bit of the field starting from the least significant bit (LSB) shall be mapped in ascending order of layer_id values to a list of layer_ids associated with the sample.

In contrast, layer_id_method_idc equal to 2 and 3 may be used when all pictures of the target layers of a sample that is mapped to the 'roll' sample group are not GDR pictures, and for pictures of the target layers that are not GDR pictures, the following picture attributes applies.

Picture attribute 1: the referenced PPS has pps_mixed_nalu_types_in_pic_flag equal to a second value (e.g., 1) (that is, each picture referencing the PPS has a hybrid NAL unit type).

Picture attribute 2: for each subpicture index i in the range of 0 to sps_num_subpics_minus1, inclusive,
2-1) sps_subpic_treated_as_pic_flag[ i ] is equal to a second value (e.g., 1) (that is, an i-th subpicture is treated as one picture).
2-2) there is at least one IRAP subpicture having the same subpicture index i in the current sample or the subsequent sample of the current sample in the same CLVS.

When layer_id_method_idc is equal to 2, the 'roll' sample group may specify the behaviour for all layers present in the track. The semantics of layer_id_method_idc equal to 3 may be specified in a standard document such as ISO/IEC 14496-15.

When a reader uses a sample marked with layer_id_method_idc equal to 2 or 3 for starting the decoding, the reader needs to further modify the sequence parameter set (SPS), picture parameter set (PPS) and picture header (PH) NAL units of the reconstructed bitstream.

Any SPS referred to by the sample has sps_gdr_enabled_flag equal to a second value (e.g., 1) (that is, GDR pictures may be enabled and present in the CLVS).

Any PPS referred to by the sample has pps_mixed_nalu_types_in_pic_flag equal to a first value (e.g., 0) (that is, each picture referencing the PPS does not have a hybrid NAL unit type).

All VCL NAL units of the access unit reconstructed from the sample have nal_unit_type equal to GDR_NUT.

Any picture header (PH) of the access unit reconstructed from the sample has ph_gdr_pic_flag equal to a second value (e.g., 1) and a value of ph_recovery_poc_cnt corresponding to the roll _distance of the 'roll' sample group description entry to which the sample is mapped. Here, ph_recovery_poc_cnt indicates a recovery point in the output order of decoded pictures.

According to the above modification, a bitstream starting with a sample marked as belonging to a sample group with layer_id_method_idc equal to 2 or 3 may satisfy bitstream conformance.

When a 'roll' sample group concerns a dependent layer but not its reference layer(s), the sample group indicates characteristics that apply when all the reference layers of the dependent layer are available and decoded. The sample group can be used to initiate decoding of the predicted layer

### Subpicture ID sample group

A subpicture ID sample group may be present in VVC subpicture tracks that contain VVC subpictures. The subpicture ID sample group shall not be present in tracks that are not VVC subpicture tracks or do not contain VVC subpictures. Each sample group description entry indicates a list of one or more subpicture ID values in decoding order that are contained in samples mapped to this sample group description entry.

FIG. 10 is a view illustrating an example of a syntax structure signaling a subpicture id sample group.

Referring to FIG. 10, num_subpics_minus1 plus 1 may specify the number of VVC subpictures contained in the sample mapped to this sample group description entry. subpic_id for loop counter i may specify the i-th subpicture identifier, in decoding order, contained in the sample mapped to this sample group description entry. The value of subpic_id shall not be equal to any other value of subpic_id in the same VvcSubpicIDEntry

### Subpicture order sample group

A subpicture order sample group may be used in VVC base tracks, i.e., in VVC tracks with 'subp' track referencing to VVC subpicture tracks. Each sample group description entry may indicate the subpictures or slices of a coded picture in decoding order, where each index of the track reference of type 'subp' may indicate one or more subpictures or slices that are contiguous in decoding order. To ease PPS or SPS rewriting in response to subpicture selection, each sample group description entry may contain the following:
an indication of whether selected subpicture IDs should be changed in PPS or SPS units
the length (in bits) of subpicture ID syntax elements
the bit position of subpicture ID syntax elements in the RBSP
a flag indicating whether start code emulation prevention bytes are present before or within subpicture IDs
the parameter set ID of the parameter set containing the subpicture IDs

FIG. 11 is a view illustrating an example of a syntax structure signaling a subpicture order sample group.

Referring to FIG. 11, subpic_id_info_flag equal to a first value (e.g., 0) may specify that the subpicture ID values are explicitly signalled in the SPSs and/or PPSs. Alternatively, subpic_idinfo_flag equal to a first value (e.g., 0) may specify that subpicture ID values inferred without explicit signalling are correct for the indicated set of subp_track_ref_idx values. Accordingly, no rewriting of SPSs or PPSs may be required. subpic_info_flag equal to a second value (e.g., 1) may specify that SPSs and/or PPSs may need rewriting to indicate the subpictures corresponding to the set of subp_track_ref_idx values. In addition, the subpicture ID values may not be inferred. num_subpic_ref_idx greater than a first value (e.g., 0) may specify the number of reference indices of subpicture tracks or track groups of subpicture tracks referenced by the VVC track. num_subpic_ref_idx equal to a first value (e.g., 0) may specify that the number of reference indices of subpicture tracks or track groups of subpicture tracks referenced by the VVC track is equal to the number of entries in the 'subp' track reference of the VVC track. In addition, num_subpic_ref_idx equal to a first value (e.g., 0) may specify that the order of subpicture tracks or track groups of subpicture tracks to be resolved for inclusion into the VVC bitstream reconstructed from the VVC track is the same as the order of the entries in the 'subp' track reference of the VVC track.

subp_track_ref_idx, for each value of i, may specify a 'subp' track reference index of the i-th list of one or more subpictures or slices to be included in the VVC bitstream reconstructed from the VVC track. subpic_id_len_minus1 plus 1 may specify the number of bits in subpicture identifier syntax elements in PPS or SPS. subpic_id_bit_pos may specify the bit position starting from 0 of the first bit of the first subpicture ID syntax element in the referenced PPS or SPS RBSP. start_code_emul_flag equal to a first value (e.g., 0) may specify that start code emulation prevention bytes are not present before or within subpicture IDs in the referenced PPS or SPS NAL unit. start_code_emul_flag equal to a second value (e.g., 1) may specify that start code emulation prevention bytes may be present before or within subpicture IDs in the referenced PPS or SPS NAL unit. pps_sps_subpic_id_flag, when equal to a second value (e.g., 1), may specify that the PPS NAL units applying to the samples mapped to the 'spor' sample group description entry contain subpicture ID syntax elements. pps_sps_subpic_id_flag, when equal to a first value (e.g., 0), may specify that the SPS NAL units applying to the samples mapped to the 'spor' sample group description entry contain subpicture ID syntax elements. pps_id, when present, may specify the PPS ID of the PPS applying to the samples mapped to the 'spor' sample group description entry. sps_id, when present, may specify the SPS ID of the SPS applying to the samples mapped to the 'spor' sample group description entry.

### Problems of the related art

A 'spid' sample group may be design for signalling the IDs of subpictures in the subpicture track that contains the sample group. The signalling may be design by always explicitly listing the IDs of the subpictures in decoding order. In most cases, the values of the subpicture IDs may increase by one. The ID information of the subpictures may contain ID values of the subpictures. Therefore, the signalling may have the following problems.

Problem: When signaling the IDs of subpictures, the IDs of the subpictures are always explicitly listed and signaled according to decoding order. The signaling does not take advantage of the fact that ID values of the subpictures increase by one. Accordingly, when the values of the subpicture IDs increase by one, if the IDs of the subpictures are always explicitly listed and signaled according to the decoding order, the IDs of the subpictures may be signaled inefficiently.

An embodiment according to the present disclosure may include at least one of the following aspects in order to solve at least one of the above problems. The following aspects may be implemented individually or in combinations.

Aspect 1: For signalling of subpicture id information, a flag may be present to specify whether the values of the subpicture IDs continuously increase by 1. For example, for ids starting with x and continuously increasing by 1, the sequence is as follows: x, x+1, x+2,... In addition, the flag specifying specify whether the values of the subpicture IDs continuously increase by 1 may be called subpicture _id_continuous_flag.

Aspect 2: When the values of the subpicture IDs continuously increase by 1, only the first subpicture ID may be explicitly signalled whereas the rest of the subpicture IDs are derived. The following process may be performed:
Let the number of subpictures be num_subpictures.
Let the first subpicture ID be explicitly signalled as subpicture_id[0].
Let the subpicture_id[i] be equal to subpicture_id[i-1]+1, for i in the range of 1 to num_subpictures-1, inclusive.

FIG. 12 is a view illustrating a syntax structure signaling subpicture ID information in a subpicture ID sample group according to an embodiment of the present disclosure.

For example, the syntax structure of FIG. 12 is to solve the above problem, and may be related to Aspect 1 above. Specifically, referring to FIG. 12, adding 1 to num_subpics_minus1 may represent the number of VVC subpictures included in the sample mapped to the 'spid' sample group description entry. The value of num_subpics_minus1 shall be less than or equal to 599. 10 bits may be allocated to signal num_subpicsminus1. Information (e.g., subpicture_id_continuous_flag) indicating whether the values of the subpicture IDs continuously increase by 1 may be signaled. 1 bit may be allocated to signal subpicture_id_continuous_flag.subpicture_id_continuous_flag equal to a first value (e.g., 0) may indicate that the subpicture IDs do not increase by 1. subpicture_id_continuous_flag equal to a second value (e.g., 1) may indicate that the subpicture IDs continuously increase by 1.
subpic_id[i] may indicate an i-th subpicture identifier included in the sample mapped to the 'spid' sample group description entry. The value of subpic_id[i] shall not be equal to the value of another subpic_id[i] in the same VvcSubpicIDEntry. 16 bits may be allocated to signal subpic_id[i]. When subpicture_id_continuous_flag is equal to a second value (e.g., 1), the value of subpic_id[i] may be equal to that of subpic_id[i-1]+1, for i in the range of 1 to num_subpics_minus1, inclusive.

According to the embodiment described with reference to FIG. 12, when the values of the subpicture IDs continuously increase by 1, only the first subpicture ID can be signaled or obtained according to the image encoding and/or decoding method according to the present disclosure. In addition, values of subpicture IDs other than the first subpicture ID may be derived. Accordingly, the image encoding and/or decoding method according to the present disclosure have the effects of encoding and/or encoding subpicture ID information more efficiently than conventional encoding and/or decoding methods in which all subpicture IDs are explicitly listed and signaled.

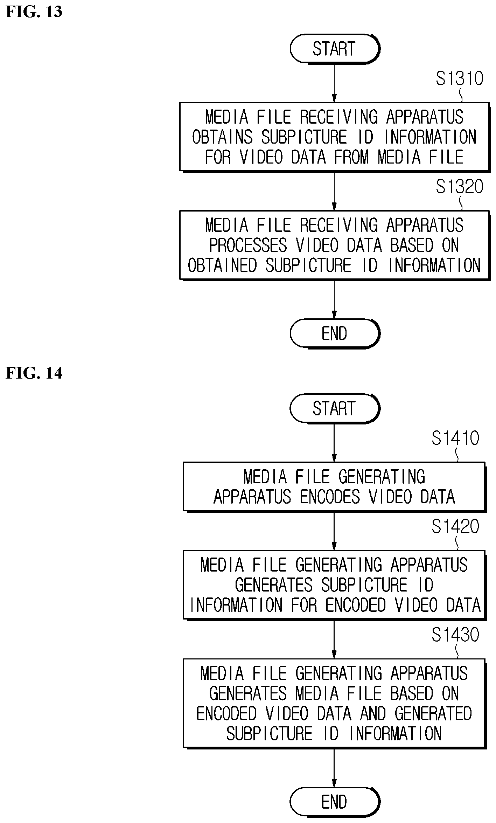

FIG. 13 is a view illustrating operation of a media file receiving apparatus according to an embodiment of the present disclosure.

Referring to FIG. 13, the media file receiving apparatus may obtain subpicture id information for video data from a media file (S1310). Here, the subpicture id information may be obtained based on information (e.g., subpicture_id_continuous_flag) indicating whether a value of subpicture id continuously increases by 1. When subpicture_id_continuous_flag is equal to a second value (e.g., 1), it may indicate that the value of subpicture id continuously increases by 1. In addition, when subpicture_id_continuous_flag is equal to a second value (e.g., 1), first subpicture id information may be obtained from the media file. In addition, when subpicture_id_continuous_flag is equal to a second value (e.g., 1), subpicture id information for remaining subpictures except for the first subpicture may not be obtained from the media file and may be derived based on the first subpicture id information. Here, the i-th subpicture id information may be obtained by adding 1 to (i-1)-th subpicture id information.

When subpicture_id_continuous_flag is a first value (e.g., 0), all subpicture id information may be obtained from the media file. The subpicture id information may correspond to information included in a sample group entry. The subpicture id information may include information indicating the number of subpictures.

In addition, the media file receiving apparatus may process the video data based on the obtained subpicture id information (S1320).

FIG. 14 is a view illustrating operation of a media file generating apparatus according to an embodiment of the present disclosure.

Referring to FIG. 14, the media file generating apparatus may encode video data (S1410).

In addition, the media file generating apparatus may generate subpicture id information for the encoded video data (S1420). Here, the subpicture id information may be generated based on subpicture_id_continuous_flag.When subpicture_id_continuous_flag is equal to a second value (e.g., 1), first subpicture id information may be generated. In addition, subpicture id information for remaining subpictures except for the first subpicture id information may not be generated. When subpicture_id_continuous_flag is equal to a first value (e.g., 0), all subpicture id information may be generated. The subpicture id information may correspond to information included in a sample group entry. The subpicture id information may include information indicating the number of subpictures.

In addition, the media file generating apparatus may generate a media file based on the encoded video data and the generated subpicture id information.

The generated media file may be transmitted to a media file receiving apparatus through a network.

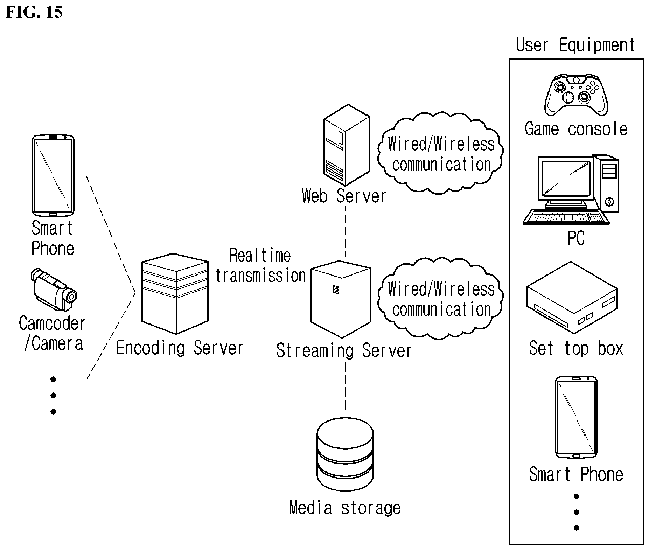

FIG. 15 is a view showing a content streaming system, to which an embodiment of the present disclosure is applicable.

As shown in FIG. 15, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to generate and transmit/receive a media file.

## Claims

1. A media file receiving method performed by a media file receiving apparatus for receiving a media file of a predetermined format, the media file including video data, the method comprising:
obtaining subpicture id information for the video data from the media file; and
processing the video data based on the obtained subpicture id information;
wherein, the obtaining subpicture id information is performed based on first information indicating whether a value of subpicture id continuously increases by 1.

2. The method of claim 1, wherein, the obtaining subpicture id information obtains first subpicture id information from the media file based on the first information indicating that the value of the subpicture id continuously increases by 1.

3. The method of claim 2, wherein, subpicture id information for remaining subpictures except for the first subpicture is not obtained from the media file, and is derived based on the first subpicture id information based on the first information indicating that the value of the subpicture id continuously increases by 1.

4. The method of claim 1, wherein, the obtaining subpicture id information obtains all subpicture id information from the media file based on the first information indicating that the value of the subpicture id continuously does not increases by 1.

5. The method of claim 1, wherein, the subpicture id information is included in a sample group entry.

6. The method of claim 1, wherein, the subpicture id information includes information indicating the number of subpictures.

7. The method of claim 3, wherein, i-th subpicture id information is obtained by adding 1 to i-1th subpicture id information.

8. A media file receiving apparatus including a memory and at least one processor,
wherein the at least on processor is configured to
obtain subpicture id information for video data from a media file; and
process the video data based on the obtained subpicture id information;
wherein, obtaining the subpicture id information is performed based on first information indicating whether a value of subpicture id continuously increases by 1.

9. A media file generating method performed by a media file generating apparatus for generating a media file of a predetermined format, the media file including video data, the method comprising:
encoding the video data;
generating subpicture id information for the encoded video data; and
generating a media file based on the encoded video data and the generated subpicture id information;
wherein, the generating subpicture id information is performed based on first information indicating whether a value of subpicture id continuously increases by 1.

10. The method of claim 9, wherein, the generating subpicture id information generates first subpicture id information based on the first information indicating that the value of the subpicture id continuously increases by 1.

11. A method transmitting a media file generated by the media file generating method of claim 9.
